(19) Europäisches Patentamt
European Patent Office
Office européen des brevets

(11) **EP 4 470 772 A1**

(12) **EUROPEAN PATENT APPLICATION**
published in accordance with Art. 153(4) EPC

(43) Date of publication:
04.12.2024 Bulletin 2024/49

(21) Application number: 23746959.8

(22) Date of filing: 25.01.2023

(51) International Patent Classification (IPC):
**B32B 27/00** (2006.01) **B32B 27/04** (2006.01)
**B32B 27/10** (2006.01)

(52) Cooperative Patent Classification (CPC):
**B32B 7/06; B32B 27/00; B32B 27/04; B32B 27/10;
C08J 5/04; E04F 13/08**

(86) International application number:
**PCT/JP2023/002170**

(87) International publication number:
**WO 2023/145748 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 26.01.2022 JP 2022010324

(71) Applicant: Dai Nippon Printing Co., Ltd.
Tokyo 162-8001 (JP)

(72) Inventors:
• AKITA Yasuhiro
  Tokyo 162-8001 (JP)
• MIYAZAKI Saori
  Tokyo 162-8001 (JP)
• FURUTA Satoshi
  Tokyo 162-8001 (JP)

(74) Representative: Müller-Boré & Partner
Patentanwälte PartG mbB
Friedenheimer Brücke 21
80639 München (DE)

(54) **DECORATIVE PANEL, METHOD FOR MANUFACTURING SAME, AND TRANSFER SHEET**

(57) The object is to provide a decorative plate capable of suppressing a decrease in adhesion between layers over time with excellent weather resistance, a method for producing the decorative plate, and a transfer sheet. The method for producing a decorative plate includes steps (1) to (4) and a step (5) carried out after the steps (1) to (4): (1) a step of obtaining a first laminate comprising a decorative base paper and a core layer in this order successively laminated on a transfer sheet comprising a releasable support, a surface protective layer comprising a first ultraviolet absorbing agent, and an easy-adhesive layer in this order, on the easy-adhesive layer side with respect to the surface protective layer; (2) a step of impregnating an uncured first curable resin into the decorative base paper; (3) a step of impregnating an uncured first curable resin into the core layer; (4) a step of curing the uncured first curable resin by applying heat and pressure to the first laminate; and (5) a step of peeling away the releasable support from the first laminate to obtain a decorative plate comprising the surface protective layer, the easy-adhesive layer, the decorative base paper, and the core paper in this order.

EP 4 470 772 A1

**Description**

Technical Field

The present disclosure relates to a decorative plate with weather resistance, a method for producing the decorative plate, and a transfer sheet.

Background Art

Conventionally, so-called decorative plates have been used as articles for decorating the surfaces of, e.g., interior or exterior members for buildings, fittings, furniture, and interior and exterior members for vehicles.

In the decorative plate, for example, a transfer sheet including a transfer layer and a peeling film is laminated on a laminate, and the peeling film is peeled off to transfer only a transfer layer on the surface of the laminate, whereby a desired function can be imparted to the surface of the laminate.

In order to impart the desired function to the base material surface, the transfer sheet is required to have various performances such as surface properties e.g., scratch resistance, stain resistance, and weather resistance, as well as adhesion between layers and processing properties.

For example, PTL 1 describes a transfer sheet comprising a base layer, a transfer layer, and an easy-adhesive layer, and proposes production of a melamine decorative plate using the transfer sheet.

Citation List

Patent Literature

PTL1: JP 2021-62580 A

Summary of Invention

Technical Problem

A decorative material is used on the surface of an article. For this reason, especially when used in an exterior member or the like, the decorative material is exposed to an ultraviolet ray or the like, and therefore is required to have high weather resistance. The weather resistance includes a decrease in adhesion between the layers constituting the laminate over time.

However, the transfer sheet of PTL 1 and the melamine decorative plate using the transfer sheet do not exhibit sufficient weather resistance, and the adhesion between the layers may be deteriorated.

The present disclosure has been made in view of such circumstances, and an object thereof is to provide a decorative plate capable of suppressing a decrease in adhesion between layers over time with excellent weather resistance, a method for producing the decorative plate, and a transfer sheet.

To achieve the above object, the present disclosure provides [1] to [3] below.

[1] A method for producing a decorative plate, comprising steps (1) to (4) and a step (5) carried out after the steps (1) to (4):

(1) a step of obtaining a first laminate comprising a decorative base paper and a core layer in this order successively laminated on a transfer sheet comprising a releasable support, a surface protective layer comprising a first ultraviolet absorbing agent, and an easy-adhesive layer in this order, on the easy-adhesive layer side with respect to the surface protective layer;

(2) a step of impregnating an uncured first curable resin into the decorative base paper;

(3) a step of impregnating an uncured first curable resin into the core layer;

(4) a step of curing the uncured first curable resin by applying heat and pressure to the first laminate; and

(5) a step of peeling away the releasable support from the first laminate to obtain a decorative plate comprising the surface protective layer, the easy-adhesive layer, the decorative base paper, and the core paper in this order.

[2] A decorative plate comprising a core paper, a decorative base paper, an easy-adhesive layer, and a surface protective layer in this order, wherein

the core paper and the decorative base paper comprise a cured product of a first curable resin, and

the surface protective layer comprises a first ultraviolet absorbing agent.

[3] A transfer sheet for a decorative plate, comprising an easy-adhesive layer, a surface protective layer, and a releasable support in this order,
wherein the surface protective layer comprises a first ultraviolet absorbing agent.

Advantageous Effects of Invention

In accordance with the present disclosure, it is possible to provide a decorative plate capable of suppressing a decrease in adhesion between layers over time with excellent weather resistance, a method for producing the decorative plate, and a transfer sheet.

Brief Description of Drawings

[Fig. 1] Fig. 1 is a cross-sectional view showing an embodiment of a decorative plate according to the present disclosure.
[Fig. 2] Fig. 2 is a cross-sectional view showing an embodiment of a decorative plate according to the present disclosure.
[Fig. 3] Fig. 3 is a cross-sectional view showing an embodiment of a transfer sheet for the decorative plate according to the present disclosure.
[Fig. 4] Fig. 4 is a cross-sectional view showing an embodiment in which the first laminate is heated and pressurized in the step (4).

Description of Embodiments

[Decorative Plate]

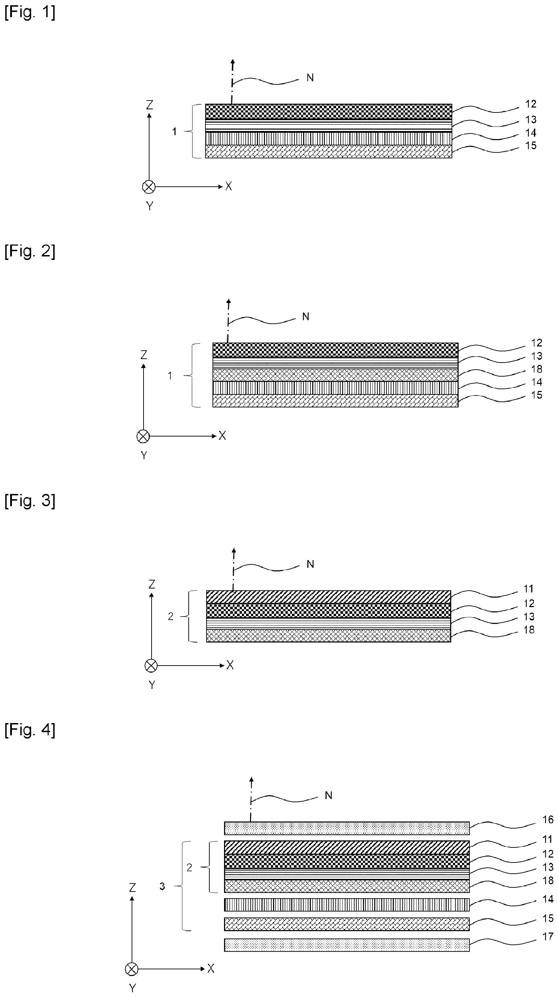

As shown in Fig. 1, the decorative plate of the present disclosure need to comprise a core paper 15, a decorative base paper 14, an easy-adhesive layer 13, and a surface protective layer 12 in this order, wherein the core paper 15 and the decorative base paper 14 contain a cured product of a first curable resin, and the surface protective layer 12 contains a first ultraviolet absorbing agent. The decorative base paper may contain a pattern layer.
Since a layer structure has the surface protective layer 12 containing the first ultraviolet absorbing agent formed on the outermost surface of the decorative plate in this manner, the decrease in the adhesion between the layers over time is suppressed, and the decorative plate can be easily produced by the method for producing a decorative plate described later. In addition, the decorative base paper preferably contains a pattern layer since fading of the pattern layer with time is also suppressed.
The decorative plate of the present disclosure has an easy-adhesive layer between the surface protective layer and the decorative base paper. With the easy-adhesive layer, the adhesion between the surface protective layer and other layers in the decorative plate can be enhanced.
The first curable resin and the first ultraviolet absorbing agent are described later.
As shown in Fig. 2, the decorative plate of the present disclosure may further have a heat seal layer 18 between the easy-adhesive layer 13 and decorative base paper 14.
It is further preferable that the heat seal layer is laminated in contact with the easy-adhesive layer and the decorative base paper since the adhesion between the easy-adhesive layer, the heat seal layer, and the decorative base paper can be enhanced.
The surface protective layer, easy-adhesive layer, and decorative base paper included in the decorative plate of the present disclosure are described below.

<Surface Protective Layer>

The surface protective layer is a layer provided on the outermost surface of the decorative plate of the present disclosure. The surface protective layer is required to contain the first ultraviolet absorbing agent described later. If the surface protective layer contains an ultraviolet absorbing agent, the adhesion to the decorative base paper containing a cured product of the first curable resin described later is reduced. However, since the decorative plate of the present disclosure has an easy-adhesive layer between the decorative base paper and the surface protective layer, the adhesion between the layers is high. In addition, it is preferable that the surface protective layer containing the first ultraviolet absorbing agent is provided on the outermost surface of the decorative plate because a decrease in adhesion between the layers over time due to an influence of ultraviolet rays can be suppressed.

It is preferable that when the decorative plate has a pattern layer, fading of the pattern layer due to ultraviolet rays can be suppressed. Furthermore, it is preferable that the surface protective layer contains a first ultraviolet absorbing agent since yellowing or the coloring of the decorative plate due to the influence of ultraviolet rays can be suppressed as compared to the melamine decorative plate described in PTL 1 above.

The surface protective layer preferably covers a part or all of the outermost surface of the decorative plate of the present disclosure, yet it is more preferable that surface protective layer covers the entire surface of the decorative plate to suppress the decrease in the adhesion between the layers over time, fading, and coloring.

The outermost surface of the surface protective layer may be smooth or uneven, but is preferably smooth in order to enhance antifouling properties. In the case where the decorative plate of the present disclosure has a pattern layer described later, convexo-concave portions are preferably provided on the surface protective layer coordinated with the pattern since a high-quality design property with a real feeling as well as a high-grade feeling is expressed.

The surface protective layer may or may not contain a cured product of the first curable resin described later but is preferably free of a cured product of the first curable resin in order to attain scratch resistance, to further exhibit the effect of the first ultraviolet absorbing agent, and to suppress bleedout of the first ultraviolet absorbing agent from the surface protective layer.

In the present disclosure, the surface protective layer preferably contains a cured product of a curable resin composition as a resin component in order to improve the weather resistance and scratch resistance. The ratio of the cured product of the curable resin composition is preferably 70% by mass or more, more preferably 90% by mass or more, still more preferably 95% by mass or more, and particularly preferably 100% by mass on the basis of the total resin components forming the surface protective layer.

The cured product of the curable resin composition is preferably a cured product of an ionizing radiation-curable resin composition in order to improve weather resistance and scratch resistance.

The ionizing radiation-curable resin composition include an electron beam-curable resin composition and an ultraviolet-curable resin composition, among which the electron beam-curable resin composition is preferred because it does not require a polymerization initiator and thus has a less odor and is less likely to be colored. Although the surface protective layer contains an ultraviolet absorbing agent, the electron beam-curable resin composition is preferred because it tends to increase the crosslinking density of the cured product layer and improve weather resistance, scratch resistance, and stain resistance.

The ionizing radiation-curable resin composition is a composition containing a compound having an ionizing radiation-curable functional group (hereinafter also referred to as an "ionizing radiation-curable compound"). The ionizing radiation-curable functional group is a group crosslinked and cured by irradiation with an ionizing radiation, and preferred examples thereof include functional groups having an ethylenic double bond, such as a (meth)acryloyl group, a vinyl group, and an allyl group. As used herein, the term "(meth)acryloyl group" refers to an acryloyl group or a methacryloyl group. As used herein, the term "(meth)acrylate" refers to an acrylate or a methacrylate.

The ionizing radiation means electromagnetic wave or charged particle beam having energy quanta capable of polymerizing and crosslinking molecules thereof. Although an ultraviolet ray (UV) or an electron beam (EB) is usually used, the ionizing radiation also includes electromagnetic wave such as an X-ray and a $\gamma$-ray and charged particle beam such as an $\alpha$-ray and an ion beam.

In order to improve processing characteristics of the transfer sheet and the scratch resistance and weather resistance of the surface protective layer, the ionizing radiation-curable compound preferably contains one or more selected from the group consisting of, for example, urethane (meth)acrylate, epoxy (meth)acrylate, polyester (meth)acrylate, polyether (meth)acrylate, polycarbonate (meth)acrylate, and acrylic (meth)acrylate, and more preferably urethane (meth)acrylate.

The urethane (meth)acrylate to be used is preferably a caprolactone-based urethane acrylate and more preferably a mixture of a caprolactone-based urethane acrylate and a caprolactone-unmodified urethane (meth)acrylate.

In the case of using a mixture of a caprolactone-based urethane acrylate and a caprolactone-unmodified urethane (meth)acrylate as the ionizing radiation-curable compound, a mass ratio $M_{CLUA}/M_{UA}$ is preferably 40/60 or more and 90/10 or less, more preferably 45/55 or more and 80/20 or less, and still more preferably 50/50 or more and 70/30 or less, where $M_{CLUA}$ is the content of the caprolactone-based urethane acrylate contained in the surface protective layer; and $M_{UA}$ is the content of caprolactone-unmodified urethane (meth)acrylate.

When the mass ratio $M_{CLUA}/M_{UA}$ is within the above range, the processing characteristics of the transfer sheet and the scratch resistance and weather resistance of the surface protective layer can be easily improved.

The caprolactone-based urethane acrylate can be usually obtained by a reaction of a caprolactone-based polyol, organic isocyanate, and hydroxy (meth)acrylate. A synthetic method is preferably a method of reacting a polycaprolactone-based polyol with an organic isocyanate to form a polyurethane prepolymer containing -NCO groups (isocyanate groups) at both terminals thereof, followed by reaction with hydroxy (meth)acrylate. The reaction conditions, etc., may be in

EP 4 470 772 A1

accordance with a conventional method.

The caprolactone-based polyol can be commercially available, and examples thereof include those preferably having two hydroxy groups and a number-average molecular weight of preferably 500 or more and 3000 or less and more preferably 750 or more and 2000 or less. Alternatively, one or more polyols other than caprolactone-based polyols, for example, ethylene glycol, diethylene glycol, 1,4-butanediol, and 1,6-hexanediol can be used alone or in the form of a mixture thereof at an arbitrary ratio.

The organic polyisocyanate is preferably a diisocyanate having two isocyanate groups, and preferred examples thereof include isophorone diisocyanate, hexamethylene diisocyanate, 4,4'-dicyclohexyl methane diisocyanate, and trimethyl hexamethylene diisocyanate from the viewpoint of suppressing yellowing.

Preferred examples of the hydroxy (meth)acrylate include 2-hydroxyethyl acrylate, 2-hydroxypropyl acrylate, and caprolactone-modified-2-hydroxyethyl acrylate.

In the present disclosure, when the ionizing radiation-curable resin composition contains a caprolactone-based polyol, the caprolactone-based urethane acrylate is preferably a caprolactonediol-based urethane acrylate. The caprolactonediol-based urethane acrylate refers to a caprolactone urethane acrylate having diethylene glycol at the terminal end. A decorative plate having excellent processability, especially without cracking or whitening, can be obtained by using the caprolactonediol-based urethane acrylate.

The number-average molecular weight of the ionizing radiation-curable compound in the present disclosure is preferably 1000 or more and 10000 or less and more preferably 2000 or more and 10000 or less. In other words, the ionizing radiation-curable compound is preferably an oligomer. When the number-average molecular weight is within the above range, a composition for forming the surface protective layer may exhibit a moderate thixotropic property, resulting in excellent processability and easy formation of the surface protective layer. In addition, the scratch resistance and weather resistance of the surface protective layer can be easily improved.

In the present specification, the number-average molecular weight is an average molecular weight measured by GPC analysis and converted with standard polystyrene.

The linear expansion coefficient of the surface protective layer, which is described later, can be adjusted according to the number of functional groups of the ionizing radiation-curable compound contained in the surface protective layer. By reducing the number of functional groups of the ionizing radiation-curable compound, the cured product of the ionizing radiation-curable resin composition contained in the surface protective layer may have a more flexible structure since crosslinking points can be reduced, and the glass transition temperature of the surface protective layer can be higher, making it easier to increase the linear expansion coefficient of the surface protective layer.

The number of functional groups in the ionizing radiation-curable compound in the present disclosure is preferably 2 or more and 20 or less, more preferably 2 or more and 18 or less, and still more preferably 2 or more and 15 or less. By setting the number of functional groups of the ionizing radiation-curable compound to 2 or more, it is possible to easily improve the scratch resistance and weather resistance of the surface protective layer. By setting the number of functional groups of the ionizing radiation-curable compound to 20 or less, it is possible to easily improve the processing characteristics of the decorative plate and the decrease in the adhesion between the surface protective layer and the easy-adhesive layer over time.

When the ionizing radiation-curable compound is a caprolactone-based urethane acrylate, the number of functional groups of the caprolactone-based urethane acrylate is preferably 2 or more and 4 or less and more preferably 2 or more and 3 or less. When the number of functional groups of the caprolactone-based urethane acrylate is within the above range, the processing characteristics of the transfer sheet and the scratch resistance and weather resistance of the surface protective layer can be easily improved.

The urethane (meth)acrylate is preferably used in combination of a bifunctional urethane (meth)acrylate and a polyfunctional urethane (meth)acrylate because the scratch resistance and weather resistance of the surface protective layer can be easily improved.

The mass ratio of the bifunctional urethane (meth)acrylate and the polyfunctional urethane (meth)acrylate in the surface protective layer is preferably 20:80 or more, more preferably 30:70 or more, and still more preferably 40:60 or more, and preferably 80:20 or less, more preferably 70:30 or less, and still more preferably 60:40 or less.

In the case where the ionizing radiation-curable compound is an ultraviolet curable compound, additives such as a photopolymerization initiator and a photopolymerization accelerator are preferably contained therein.

Examples of the photopolymerization initiator include one or more selected from the group consisting of acetophenone, benzophenone, α-hydroxyalkylphenone, Michler's ketone, benzoin, benzyl dimethyl ketal, benzoyl benzoate, α-acyloxime ester, acylphosphine oxide, and thioxanthones.

Meanwhile, the photopolymerization accelerator can reduce polymerization inhibition by air during curing and accelerate a curing rate, and examples thereof include one or more selected from the group consisting of p-dimethylaminobenzoic acid isoamyl ester and p-dimethylaminobenzoic acid ethyl ester.

The desired surface protective layer is preferably formed by applying an ink used for forming the surface protective layer onto a releasable support described later.

The application of the ink used for forming the surface protective layer is carried out by known methods such as a gravure coating, bar coating, roll coating, reverse roll coating and Komma coating, preferably gravure coating.

The ink used for forming the surface protective layer preferably contains an ionizing radiation-curable resin composition or a thermosetting resin composition, and a solvent. The solvent is not particularly limited as long as it dissolves a solute and does not interfere with the application.

The ionizing radiation-curable resin composition and the thermosetting resin composition usable in the present disclosure is preferably resin compositions that can be used in the release sheet described above.

Examples of the solvent include ketone solvents such as methyl ethyl ketone and acetone; ester solvents such as methyl acetate, ethyl acetate, and butyl acetate; ether solvents such as diethyl ether, tetrahydrofuran, and 1, 4-dioxane; and alcohol solvents such as methanol, ethanol, and propanol, and these solvents can be used alone or in combination.

When an ionizing radiation-curable composition is used as the ink, an uncured resin layer formed by application of the ink may be irradiated with an ionizing radiation such as an electron beam and an ultraviolet ray to cure the uncured resin layer. When an electron beam is used as the ionizing radiation, an acceleration voltage for the electron beam may be appropriately determined according to resin used and the thickness of the resin layer, and the uncured resin layer is preferably cured at an acceleration voltage of 70 kV or more and 300 kV or less. The exposure dose of the electron beam is preferably such an amount capable of saturating a crosslinking density of the ionizing radiation-curable resin, and may be selected from the range of usually 5 kGy or more and 300 kGy or less (0.5 Mrad or more and 30 Mrad or less) and preferably 10 kGy or more and 50 kGy or less (1 Mrad or more and 5 Mrad or less).

The electron beam source is not particularly limited, and examples of the electron beam source usable in the present disclosure include various electron beam accelerators such as Cockroft-Walton type, van de Graaff type, resonance transformer type, insulating core transformer type, linear type, Dynamitron type and high-frequency type.

When an ultraviolet ray is used as the ionizing radiation, the ultraviolet ray to be irradiated may have a wavelength of 190 to 380 nm. The ultraviolet ray source is not particularly limited, and examples of the ultraviolet ray source usable in the present disclosure include a high-pressure mercury lamp, a low-pressure mercury lamp, a metal halide lamp, and a carbon arc lamp.

The thickness of the surface protective layer is preferably 5 $\mu$m or more and 100 $\mu$m or less, more preferably 8 $\mu$m or more and 70 $\mu$m or less, and still more preferably 10 $\mu$m or more and 50 $\mu$m or less in order to improve the processing characteristics of the transfer sheet described later and the weather resistance and scratch resistance of the decorative plate.

In the weather resistance, a decrease in adhesion between the layers over time can be evaluated by interlayer separation after an accelerated weathering test through irradiation with an ultraviolet ray. If the layers comprising the decorative plate are peeled off and separated by the irradiation with an ultraviolet ray, it can be evaluated that the adhesion between the layers with time has deteriorated. The adhesion between the layers with time can be determined, for example, by the method described in Examples. In the case of a decorative plate that does not contain an ultraviolet absorbing agent in the surface protective layer as in PTL 1, the adhesion between the surface protective layer and the easy-adhesive layer is particularly reduced.

The scratch resistance can be evaluated by pencil hardness, which can be determined, for example, by the method described in Examples.

<<First Ultraviolet Absorbing Agent>>

The surface protective layer of the present disclosure is required to contain a first ultraviolet absorbing agent.

As the ultraviolet absorbing agent contained in the surface protective layer, the first ultraviolet absorber is preferably a triazine compound and a hydroxyphenyltriazine compound because the first ultraviolet absorbing agent is likely to be suppressed from bleeding out from the surface protective layer and can impart long-time weather resistance to the decorative plate of the present disclosure.

Preferred examples of the hydroxyphenyltriazine compound include 2-(2-hydroxy-4-[1-octyloxycarbonylethoxy] phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl) -1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, and 2-(4,6-diphenyl-1,3,5-triazin-2-yl)-5-[2 -(2-ethylhexanyloxy)ethoxy]phenol, and these compounds can be used alone or in combination of a plurality thereof.

The content of the first ultraviolet absorbing agent contained in the surface protective layer is preferably 0.1 parts by mass or more and 10 parts by mass or less, more preferably 0.3 parts by mass or more and 8 parts by mass or less, and more preferably 0.8 parts by mass or more and 5 parts by mass or less on the basis of 100 parts by mass of the resin component. When the content of the first ultraviolet absorbing agent is within the above range, the ultraviolet absorbing agent causes no bleedout, and an effect of suppressing a decrease in adhesion between the layers over time, fading, and coloring can be attained. When the content of the first ultraviolet absorbing agent is 10 parts by mass or less, a decrease in crosslinking density of the surface protective layer can be suppressed, thus making it easier to improve the weather resistance.

The surface protective layer may contain other additives, if necessary, as long as the effects of the present disclosure are not impaired. For example, a filler, a light stabilizer, a curing agent, and an antioxidant are preferably used as the other additives.

«Filler»

The surface protective layer preferably contains a filler in order to improve the scratch resistance of the surface protective layer. Examples of the filler include organic fillers such as acrylic resin beads and urethane resin beads and inorganic fillers, among them an inorganic filler is more preferred in terms of scratch resistance.

Examples of the inorganic filler include particles made of inorganic materials such as oxides such as aluminum oxide, magnesium oxide, silica, calcium oxide, titanium oxide, zinc oxide, and zirconia oxide; hydroxides such as aluminum hydroxide, magnesium hydroxide, and calcium hydroxide; carbonates such as magnesium carbonate and calcium carbonate; sulfates such as calcium sulfate and barium sulfate; and silicates such as magnesium silicate, aluminum silicate, calcium silicate, and aluminosilicate. Among them, oxides such as aluminum oxide, magnesium oxide, silica, calcium oxide, titanium oxide, and zinc oxide are preferred, and silica is particularly preferred.

The silica may be silica having an average particle size of 0.3 $\mu$m or more and 20 $\mu$m or less or so-called nanosilica having an average particle size of 1.0 nm or more and 50 nm or less, and nanosilica is preferred.

The average particle size of the inorganic filler is preferably 0.3 $\mu$m or more and 20 $\mu$m or less and more preferably 0.5 $\mu$m or more and 10 $\mu$m or less in order to obtain a higher-quality design property. In the present specification, the average particle size of the filler is a value obtained as the mass average value d50 in the particle size distribution measurement by laser light diffractometry.

The average particle size of nanosilica is preferably 1 $\mu$m or less, and is 1 nm or more and 500 nm or less, more preferably 2 nm or more and 100 nm or less.

These inorganic fillers are preferably surface-treated. Examples of the surface treating agent for treating the surface of the inorganic filler include alkoxysilanes, and silane coupling agents having a reactive group such as a (meth) acryloyloxy group, an epoxy group, a vinyl group, a styryl group, an amino group, an isocyanate group, a ureido group, a sulfide group, and a mercapto group. In order to obtain a higher-quality design property, a silane coupling agent having a (meth)acryloyloxy group, an epoxy group, a vinyl group, or an amino group, i.e., a (meth)acryloyloxy-based silane coupling agent, an epoxy-based silane coupling agent, a vinyl-based silane coupling agent, or an amino-based silane coupling agent is preferred. These surface treating agents may be used alone or in the form of a mixture of a plurality thereof.

Preferred examples of the alkoxy silane include trialkoxy silanes such as methyltrimethoxysilane and methyltriethoxysilane.

Preferred examples of the (meth) acryloyloxy-based silane coupling agent include 3-(meth)acryloyloxypropyl methyldimethoxysilane; preferred examples of the epoxy-based silane coupling agent include diethoxy(glycidyloxypropyl)methylsilane and 2-(3,4 epoxycyclohexyl)ethyltrimethoxysilane; preferred examples of the vinyl-based silane coupling agent include vinyltrimethoxysilane and vinyltriethoxysilane, and preferred examples of the amino-based silane coupling agent include N-2-(aminoethyl)-3-aminopropylmethyldimethoxysilane and N-2-(aminoethyl)-3-aminopropyltrimethoxysilane.

Among the above, the inorganic filler is preferably surface-treated silica particle, where the silica particle is subjected to surface treatment with a silane coupling agent, is preferred in order to improve scratch resistance.

The content of the filler is preferably 0.1 parts by mass or more and 20 parts by mass or less, more preferably 0.5 parts by mass or more and 10 parts by mass or less, and still more preferably 0.8 parts by mass or more and 5 parts by mass or less on the basis of 100 parts by mass of the resin component forming the surface protective layer. When the content of the filler is within the above range, the effect of adding the filler can be efficiently attained.

«Light Stabilizer»

The light stabilizer is preferably a hindered amine-based light stabilizer.

Examples of the hindered amine-based light stabilizer include 1,2,2,6,6-pentamethyl-4-piperidinyl methacrylate, bis(1,2,2,6,6-pentamethyl-4-piperidyl)sebacate, bis(2,2,6,6-pentamethyl-4-piperidyl)sebacate, bis(1,2,2,6,6-pentamethyl-4-piperidinyl)sebacate, methyl(1,2,2,6,6-pentamethyl-4-piperidinyl)sebacate, and 2,4-bis[N-butyl-N-(1-cyclohexyloxy-2,2,6,6-tetramethylpiperidin-4-yl)amino]-6-(2-hydroxyethylamine)-1,3,5-triazine).

The content of the light stabilizer contained in the surface protective layer is preferably 0.1 parts by mass or more and 10 parts by mass or less, more preferably 0.5 parts by mass or more and 8 parts by mass or less, and more preferably 0.8 parts by mass or more and 5 parts by mass or less on the basis of 100 parts by mass of the resin component. When the content of the light stabilizer is within the above range, the light stabilizer causes no bleed out and has sufficient light stability, thus achieving excellent weather resistance.

<Easy-adhesive layer>

The decorative plate of the present disclosure is required to have an easy-adhesive layer between the surface protective layer and a decorative base paper described later. Since the decorative sheet of the present disclosure has the easy-adhesive layer between the surface protective layer and the decorative base paper, the initial adhesion between the layers is improved, and furthermore, the decrease in the adhesion between the layers over time is suppressed, thereby improving the weather resistance and durability of the decorative plate. Compared to the case where the surface protective layer and the decorative base paper or the surface protective layer and the heat seal layer are directly laminated without including the easy-adhesive layer, it is preferable to laminate these layers through the easy-adhesive layer since the adhesion is improved. The initial adhesion is hereinafter also referred to as "initial adhesion".

The surface protective layer preferably contains a cured product of an ionizing radiation-curable resin and also preferably is sufficiently cured when the surface protective layer is formed, and the linear expansion coefficient tends to be relatively small.

On the other hand, since the easy-adhesive layer may have a low Tg in order to improve the initial adhesion of the easy-adhesive layer and improve the adhesion between the layers comprising the transfer layer, the linear expansion coefficient tends to be relatively large.

The decorative plate of the present disclosure is preferred in production methods (B) and (C) described later since it has an easy-adhesive layer and thus hinders impregnation of the uncured first curable resin into the surface protective layer and the easy-adhesive layer.

When $A_{HC-Pr}$ denotes the absolute value of the difference in linear expansion. coefficient between the surface protective layer and the easy-adhesive layer in a temperature range of 40°C to 50°C, and $B_{HC-Pr}$ denotes the absolute value of the difference in the linear expansion coefficient between the surface protective layer and the easy-adhesive layer in a temperature range of 70°C to 80° C, it is preferable that the following (Formula 1) is satisfied:

$$B_{HC-Pr}\text{-}A_{HC-Pr} \leq 5.0 \times 10^{-4}/°C \qquad \text{(Formula 1)}$$

where HC is an abbreviation for hard coat and corresponds to the surface protective layer, and Pr is an abbreviation for primer and corresponds to the easy-adhesive layer.

By making the structure of the easy-adhesive layer more rigid and reducing the linear expansion coefficient, $A_{HC-Pr}$ and $B_{HC-Pr}$ can be reduced, and the above (Formula 1) can be easily satisfied, making it easier to improve the adhesion between the surface protective layer and the easy-adhesive layer over times.

Although the reason for the said effects is not certain, it is presumed as follows.

In the above (Formula 1), $A_{HC-Pr}$ is a difference in linear expansion coefficient between the surface protective layer and the easy-adhesive layer in the so-called low-temperature range and is an index representing the difference in deformability between the surface protective layer and the easy-adhesive layer in the low-temperature range. $B_{HC-Pr}$ is a difference in linear expansion coefficient between the surface protective layer and the easy-adhesive layer in the so-called high-temperature range and is an index representing the difference in deformability between the surface protective layer and the easy-adhesive layer in the high-temperature range.

It is considered that when these indexes are small, strain caused by deformation due to a temperature change between the surface protective layer and the easy-adhesive layer can be suppressed in each temperature range, thus preventing a decrease in adhesion between the layers.

Then, the left side of the above (Formula 1) expresses a difference between the difference in deformability between the surface protective layer and the easy-adhesive layer in the high-temperature range and the deference in deformability between the surface protective layer and the easy-adhesive layer in the low-temperature range. In other words, the left side of the above (Formula 1) means the temperature dependency of the difference in deformability between the surface protective layer and the easy-adhesive layer, and it is considered that the smaller this value is, the smaller the difference in deformation between the surface protective layer and the easy-adhesive layer is even in an environment where rapid changes in temperature are repeated due to a temperature difference between day and night or a temperature difference due to a difference in seasons, such as outdoor, and thus the decrease in adhesion between the layers can be prevented.

Therefore, it is preferable that the decorative plate of the present disclosure satisfies the above (Formula 1), whereby weather resistance with time can be improved particularly when the decorative plate is used for a member used outdoors.

The value of (Formula 1) is $5.0 \times 10^{-4}/° C$ or less, preferably $4.5 \times 10^{-4}/°C$ or less, more preferably $4.0 \times 10^{-4}/° C$ or less, and still more preferably $3.5 \times 10^{-4}/°C$ or less in order to improve the adhesion between the surface protective layer and the easy-adhesive layer with time. In the above (Formula 1), the lower limit is not particularly limited, but is preferably 0/°C or more in order to improve the adhesion between the surface protective layer and the easy-adhesive layer over time.

In the decorative plate of the present disclosure, $B_{HC-Pr}$ is preferably $7.0 \times 10^{-4}$/°C or less, more preferably $6.0 \times 10^{-4}$/°C or less, still more preferably $5.0 \times 10^{-4}$/°C or less, and even more preferably $4.5 \times 10^{-4}$/°C or less in order to improve the interlayer adhesion between the surface protective layer and the easy-adhesive layer in the high-temperature range. The lower limit of the $B_{HC-Pr}$ is not particularly limited, but is preferably 0/°C or more in order to improve the initial interlayer adhesion between the surface protective layer and the easy-adhesive layer in the high-temperature range.

In the decorative plate of the present disclosure, $A_{HC-Prq}$ is preferably $2.0 \times 10^{-4}$/°C or less, more preferably $1.5 \times 10^{-4}$/°C or less, and still more preferably $1.1 \times 10^{-4}$/°C or less in order to improve the initial interlayer adhesion between the surface protective layer and the easy-adhesive layer in the low-temperature range. The lower limit of the $A_{HC-Pr}$ is not particularly limited, but is preferably 0/°C or more in order to improve the initial interlayer adhesion between the surface protective layer and the easy-adhesive layer in the low-temperature range.

The easy-adhesive layer preferably contains a cured product of a curable resin composition in order to improve the processability of the transfer sheet described later and the adhesion between the surface protective layer contained in the decorative plate and the decorative base paper.

The cured product of the curable resin composition contained in the easy-adhesive layer preferably contains a cured product of a thermosetting resin composition in order to improve the adhesion between the layers contained in the transfer layer.

The thermosetting resin composition is a composition containing at least a thermosetting resin and is a resin composition which is cured by heating. Examples of the thermosetting resin include an acrylic resin, a urethane resin, a urethane acrylic resin, a phenol resin, a urea melamine resin, an epoxy resin, an unsaturated polyester resin, and a silicone resin, and these resins can be used alone or in combination of a plurality thereof. The thermosetting resin composition may also be obtained by adding a curing agent such as an isocyanate-based curing agent and an epoxy-based curing agent to these resins.

The easy-adhesive layer may or may not contain a cured product of the first curable resin described later but is preferably free of a cured product of the first curable resin in order to exhibit the effect of the second ultraviolet absorbing agent and to suppress bleedout of the second ultraviolet absorbing agent from the easy-adhesive layer in the case of containing the second ultraviolet absorbing agent.

In addition, the easy-adhesive layer is preferably free of a cured product of the first curable resin in order to improve the processability of the transfer sheet described later and the adhesion between the layers contained in the decorative plate.

The cured product of the thermosetting resin composition contained in the easy-adhesive layer is more preferably a cured product of a thermosetting resin composition containing an acrylic resin, a urethane resin, or a urethane acrylic resin, and more preferably contains a urethane acrylic resin. The cured product of the thermosetting resin composition contained in the easy-adhesive layer preferably contains an isocyanate-based curing agent or an epoxy-based curing agent crosslinking agent and more preferably an isocyanate-based curing agent in order to make the structure of the cured product of the thermosetting resin composition contained in the easy-adhesive layer more rigid.

In the case where the easy-adhesive layer contains a urethane acrylic resin, the urethane acrylic resin is preferably an acrylic urethane copolymer and more preferably a polycarbonate acrylic urethane copolymer.

When the easy-adhesive layer contains the polycarbonate acrylic urethane copolymer, the adhesion between the layers comprising the decorative plate can be easily improved, thereby facilitating the improvement of weather resistance and durability of the transfer layer. In addition, the structure of the easy-adhesive layer can be easily made more rigid while the linear expansion coefficient can be easily made small, and thus the above (Formula 1) can be easily satisfied.

The polycarbonate urethane acrylic copolymer is a resin obtained by radically polymerizing an acrylic monomer using a polycarbonate polyurethane polymer obtained by reacting a polycarbonate diol with a (di)isocyanate as a radical polymerization initiator.

Examples of the (di)isocyanate include aromatic isocyanates such as 4,4'-diphenylmethane diisocyanate, 2,4-tolylene diisocyanate, 1,5-naphthalene diisocyanate, n-isocyanate phenylsulfonyl isocyanate, o-isocyanate phenylsulfonyl isocyanate, and p-isocyanate phenylsulfonyl isocyanate; aliphatic isocyanates such as 1,6-hexamethylene diisocyanate; cycloaliphatic isocyanates such as isophorone diisocyanate, hydrogenated xylylene diisocyanate, and hydrogenated diphenylmethane diisocyanate; and adducts and multimers thereof. These (di)isocyanates can be used alone or in combination of any two or more thereof. Among these (di)isocyanates, aliphatic isocyanates such as hexamethylene diisocyanate; and cycloaliphatic isocyanates such as isophorone diisocyanate and hydrogenated diphenylmethane diisocyanate are preferably used in order to improve the weather-resistant adhesion of the transfer layer.

Examples of the acrylic monomer include (meth)acrylic acid, and (meth)acrylate alkyl esters such methyl (meth)acrylate, ethyl (meth)acrylate, n-propyl (meth)acrylate, isopropyl (meth)acrylate, n-butyl (meth)acrylate, and isobutyl (meth)acrylate, and these acrylic monomers can be used alone or in combination of any two or more thereof.

In the case where the easy-adhesive layer contains a polycarbonate urethane acrylic copolymer in the present disclosure, a mass ratio of the urethane component to the acrylic component of the polycarbonate urethane acrylic copolymer, [urethane component]/[acrylic component], is preferably 75/25 or more and 95/5 or less and more preferably 80/20 or more and 90/10 or less.

In the case where the easy-adhesive layer contains a polycarbonate urethane acrylic copolymer in the present disclosure, the thermal expansion coefficient of the easy-adhesive layer can be adjusted according to the mass ratio of the urethane component to the acrylic component of the polycarbonate urethane acrylic copolymer, [urethane component]/[acrylic component].

Since the ratio of the urethane component of the polycarbonate urethane acrylic copolymer can be increased by increasing the [urethane component]/[acrylic component] of the polycarbonate urethane acrylic copolymer, the polycarbonate structure derived from a urethane bond and polycarbonate diol in the polycarbonate urethane acrylic copolymer can be increased. Therefore, the structure of the polycarbonate urethane acrylic copolymer becomes more rigid, and the amount of change in volume with respect to a change in temperature becomes small, thereby making it possible to reduce the linear expansion coefficient of the easy-adhesive layer in a low-temperature range and a high temperature.

The urethane (meth)acrylate is preferably used in combination of a bifunctional urethane (meth)acrylate and a polyfunctional urethane (meth)acrylate because the initial adhesion can be easily improved.

The mass ratio of the bifunctional urethane (meth)acrylate and the polyfunctional urethane (meth)acrylate in the easy-adhesive layer is preferably 80:20 or more, more preferably 85:15 or more, and still more preferably 87:13 or more, and preferably 98:2 or less, more preferably 95:5 or less, and still more preferably 93:7 or less.

<<Second Ultraviolet Absorbing Agent>>

The easy-adhesive layer preferably contains a second ultraviolet absorbing agent. In addition to the surface protective layer, the easy-adhesive layer preferably further contains an ultraviolet absorbing agent since the decrease in the adhesion between the layers over time, fading, and coloring can be further suppressed.

The second ultraviolet absorbing agent may be the same as the first ultraviolet absorbing, and the first ultraviolet absorbing agent and the second ultraviolet absorbing agent may be the same or different, but both are preferably the triazine compounds from the viewpoint of imparting long-time weather resistance to the decorative plate of the present disclosure.

The content of the second ultraviolet absorbing agent contained in the easy-adhesive layer is preferably 5 parts by mass or more and 60 parts by mass or less, more preferably 10 parts by mass or more and 50 parts by mass or less, and more preferably 15 parts by mass or more and 45 parts by mass or less on the basis of 100 parts by mass of the resin component. When the content of the second ultraviolet absorbing agent is within the above range, the second ultraviolet absorbing agent causes no bleedout, and an effect of suppressing a decrease in adhesion between the layers over time, fading, and coloring can be attained. When the content of the second ultraviolet absorbing agent is 60 parts by mass or less, a decrease in crosslinking density of the easy-adhesive layer can be suppressed, thus making it easier to enhance the durability.

In the decorative plate of the present disclosure, in a case where the easy-adhesive layer contains the second ultraviolet absorbing agent, the content of the first ultraviolet absorbing agent per unit volume of the surface protective layer is preferably less than the content of the second ultraviolet absorbing agent per unit volume of the easy-adhesive layer, thereby improving the initial adhesion. The content of the second ultraviolet absorbing agent per unit volume of the surface protective layer is more preferably 1.0 time or more and 100.0 times or less, more preferably 2.0 times or more and 60.0 times or less, and still more preferably 3.0 times or more and 50.0 times or less to the content of the first ultraviolet absorbing agent per unit volume of the easy-adhesive layer.

The easy-adhesive layer may contain other additives, if necessary, as long as the effects of the present disclosure are not impaired. For example, a filler, a light stabilizer, a curing agent, and an antioxidant are preferably used as the other additives.

The filler usable in the present disclosure is the same as the filler described above, but silica is preferred.

The silica may be silica having an average particle size of 0.3 $\mu$m or more and 20 $\mu$m or less or so-called nanosilica having an average particle size of 1.0 nm or more and 50 nm or less, and silica having an average particle size of 0.3 $\mu$m or more and 20 $\mu$m or less is preferred.

The average particle size of the silica is preferably 0.5 $\mu$m or more and 10 $\mu$m or less and more preferably 1 $\mu$m or more and 8 $\mu$m or less in order to obtain a higher-quality design property.

The content of the filler is preferably 0.1 parts by mass or more and 20 parts by mass or less, more preferably 0.5 parts by mass or more and 10 parts by mass or less, and still more preferably 0.8 parts by mass or more and 5 parts by mass or less on the basis of 100 parts by mass of the resin component forming the easy-adhesive layer. When the content of the filler is within the above range, the effect of adding the filler can be efficiently attained.

The light stabilizer usable in the present disclosure is the above-described light stabilizer and preferably a hindered amine-based light stabilizer.

The content of the light stabilizer is preferably 0.1 parts by mass or more and 20 parts by mass or less, more preferably 0.5 parts by mass or more and 10 parts by mass or less, and still more preferably 0.8 parts by mass or more and 5 parts by mass or less on the basis of 100 parts by mass of the resin component forming the easy-adhesive layer. When the content of the light stabilizer is within the above range, the effect of adding the light stabilizer can be efficiently attained.

The curing agent is preferably an isocyanate-based curing agent or an epoxy-based curing agent crosslinking agent and more preferably an isocyanate-based curing agent.

The content of the curing agent is preferably 0.1 parts by mass or more and 20 parts by mass or less, more preferably 0.5 parts by mass or more and 15 parts by mass or less, and still more preferably 0.8 parts by mass or more and 12 parts by mass or less on the basis of 100 parts by mass of the resin component forming the easy-adhesive layer. When the content of the curing agent is within the above range, the effect of adding the curing agent can be efficiently attained.

The easy-adhesive layer is preferably formed on the surface protective layer using an easy-adhesive layer forming ink. The easy-adhesive layer can be formed by the same method as the formation of the protective layer.

The thickness of the easy-adhesive layer is preferably 2 μm or more and 10 μm or less, more preferably 3 μm or more and 8 μm or less, and still more preferably 3 μm or more and 5 μm or less in order to improve the processing characteristics of the transfer sheet and the weather-resistant adhesion of the transfer layer.

<Decorative Base Paper>

The decorative plate of the present disclosure is required to have a decorative base paper. The decorative base paper is required to contain a cured product of the first curable resin described later.

The decorative plate of the present disclosure preferably has a decorative base paper because it provides excellent mechanical properties, etc., and allows the decorative plate to be held.

The decorative base paper is not particularly limited, and may be appropriately selected according to the desired performance, and preferred examples thereof include a paper substrate, a fiber substrate, and a resin substrate in order to improve a handling property. The decorative base paper is more preferably a paper substrate and fiber substrate having liquid permeability and more preferably a paper substrate because a decorative plate having superior mechanical properties can be obtained.

Examples of the paper substrate include titanium paper, kraft paper, linter paper, resin-impregnated paper, thin paper, and Japanese paper. Examples of the fiber substrate include nonwoven fabrics and woven fabrics, e.g., fiber substrates composed of inorganic fibers such as glass fibers, alumina fibers, silica fibers, and carbon fibers; fiber substrates composed of organic fibers of various synthetic resins such as polyester resins, acrylic resins, polyethylene resins, and polypropylene resins; and substrates such as composites thereof.

The thickness of the decorative base paper is not particularly limited, and may be appropriately selected depending on desired performance and is usually 10 μm or more and 200 μm or less, preferably 20 μm or more and 150 μm or less, and more preferably 30 μm or more and 120 μm or less in order to ensure a mechanical property and to improve a handling property. In addition, when a paper substrate is used as the decorative base paper, the basis weight is usually 20 g/m$^2$ or more and 150 g/m$^2$ or less and preferably 30 g/m$^2$ or more and 100 g/m$^2$ in order to improve the handling property.

The decorative base paper is preferably a decorative base paper containing a cured product of the first curable resin by press-molding or heat- and press-molding using a paper substrate or fiber substrate impregnated with a liquid uncured product of the first curable resin. With such a configuration, the mechanical strength of the decorative plate of the present disclosure is improved. The details of the production method is described later.

<<First Curable Resin>>

Preferable examples of the cured product of the first curable resin contained in the decorative base paper include a melamine resin, a urea resin, a melamine-urea resin, a guanamine resin, a diallyl phthalate resin, a polyester resin, a phenol resin, an epoxy resin, an amino-alkyd resin, a silicone resin, and a polysiloxane resin. Thermosetting resins such as melamine resins, urea resins, melamine-urea resins, guanamine resins, and sulfonamide resins are preferable, among which melamine resins, melamine-urea resins, and phenol resins are preferred, and melamine resins are particularly preferred.

The melamine resin is preferably an aqueous melamine resin because the melamine resin can be easily impregnated into the decorative base paper and the core paper described later, and the initial adhesion between the easy-adhesive layer, the heat seal layer and the core paper is improved when the decorative plate have the heat seal layer.

The decorative base paper may be used without curing the first curable resin or may be used after curing a part of the first curable resin.

The aqueous melamine resin is preferably a water-soluble or water-dispersible resin selected from a methylolated amino resin obtained by a reaction of melamine with aldehyde and an etherified amino resin obtained by etherifying the methylolated amino resin with an appropriate alcohol. The aldehyde is preferably formaldehyde, paraformaldehyde, acetaldehyde, benzaldehyde, etc. The alcohol used for etherification is preferably methyl alcohol, ethyl alcohol, n-propyl alcohol, i-propyl alcohol, n-butyl alcohol, or i-butyl alcohol, and more preferably methyl alcohol.

In order to improve the interlayer adhesion with other layers, the decorative base paper may be subjected to a surface treatment such as a physical surface treatment including an oxidation method or a roughening method, or a chemical surface treatment on one or both sides thereof.

Examples of the oxidation method include a corona discharge treatment, a chromium oxidation treatment, a flame treatment, a hot air treatment, and an ozone-ultraviolet treatment method, and examples of the roughening method include a sandblasting method and a solvent treatment method. These surface treatments are appropriately selected according to the kind of the substrate, but in general, a corona discharge treatment method is preferably used in terms of the effect of the surface treatment, the operability, and the like.

«Pattern Layer»

The decorative base paper of the present disclosure may contain a pattern layer in order to express a higher-quality design property and correspond to various design properties. The pattern layer is preferably provided on the surface of the decorative base paper on the easy-adhesive layer side.

The pattern layer may be, for example, a colored layer covering the entire surface (so-called solid colored layer), a decoration layer formed by various patterns or a combination thereof. For example, in the case of coloring and hiding the ground color of a decorative base paper, etc., a solid colored layer may be used to obtain a higher-quality design property while coloring and hiding. A solid colored layer and a decoration layer may be used in combination to express a wider variety of designs, whereas in the case of utilizing the ground pattern of an adhering material, only a decoration layer may be provided without a solid colored layer.

The decorative base paper may have a pattern layer on the entire surface or may have a pattern layer only on a part thereof.

In the case of having a decoration layer as the pattern layer, the pattern conferred by the pattern layer is not particularly limited and can be selected as desired. Examples thereof include a woodgrain conduit pattern a marble pattern (e.g., travertine marble pattern), a pebble patterns which mimics the surface of rock such as the cleavage plane of granite rock, a fabric pattern which mimics the grains of a fabrics or cloth-like pattern, a leather pattern which expresses leather grains, a tiled pattern, a bricked pattern, a hairline, a parallel-line groove, a pearskin finish, a sand grain pattern, a letter, a symbol, a geometric pattern, and a composite marquetry thereof, a patchwork, and a pattern like the above-described artificial marble.

The thickness of the pattern layer may be appropriately selected according to the desired pattern and is preferably 0.5 $\mu$m or more and 20.0 $\mu$m or less, more preferably 1.0 $\mu$m or more and 10.0 $\mu$m or less, and still more preferably 2.0 $\mu$m or more and 7.0 $\mu$m or less in order to obtain a high-quality design property.

The pattern layer is preferably formed on the decorative base paper using a pattern layer forming ink. The pattern layer can be formed by the same method as the formation of the protective layer.

<Core Paper>

The core paper is a layer reinforcing the decorative plate of the present disclosure, which is provided on the side of the decorative base paper opposite to the easy-adhesive layer. The core paper can be made of various materials and materials comprising various layers according to the kind and application of the decorative plate. The core paper is required to contain a cured product of the first curable resin. When the decorative plate is a thermosetting resin decorative plate, it is preferable that the core paper contains an uncured curable resin and is formed by thermal curing. The core paper contains a cured product of the first curable resin, thereby obtaining a decorative plate superior in mechanical properties.

The core paper may further contain a cured product of the second curable resin.

The fiber substrate and paper substrate used for the core paper may be any of those exemplified as the fiber substrate and paper substrate of the decorative base paper, and the basis weight of the core paper is preferably 100 g/m$^2$ or more and 300 g/m$^2$ or less and more preferably 150 g/m$^2$ or more and 250 g/m$^2$ or less, unlike the decorative base paper.

<<Second Curable Resin>>

The second curable resin usable in the present disclosure is the same as the first curable resin, and the second curable resin and the first curable resin may be the same or different. The second curable resin is preferably a phenol resin.

In the case where the second curable resin is a phenol resin, the core paper is preferably a phenol resin-impregnated paper which is commonly used as a core paper for melamine resin decorative plate, etc.

The phenol resin-impregnated paper may be used without curing the second curable resin or may be used after curing a part of the second curable resin.

The phenol resin-impregnated paper used is preferably produced, for example, by impregnating a phenol resin into a kraft paper having a basis weight of 150 g/m$^2$ or more and 250 g/m$^2$ or less so that an impregnation rate of 20% or more and 60% or less, followed by drying at 100°C or more and 140°C or less.

(Heat Seal Layer)

The decorative plate of the present disclosure preferably further has a heat seal layer between the easy-adhesive layer and the decorative base paper.

Having a heat seal layer is preferred since a decrease in the adhesion between the easy-adhesive layer and the decorative base paper over time can be suppressed. Although the adhesion to the decorative base paper tends to decrease when the easy-adhesive layer contains the second ultraviolet absorbing agent, having a heat seal layer is preferred since the adhesion to the decorative base paper may become good, and the adhesion to the decorative base paper can be improved while exerting the effect of the second ultraviolet absorbing contained in the easy-adhesive layer.

The heat seal layer may be any one of a pressure-sensitive adhesive layer, a curable adhesive layer and a heat-sensitive adhesive layer, among which a heat-sensitive adhesive layer is preferred in order to improve the processability of the transfer sheet described later and the adhesion between the transfer sheet and the decorative base paper.

When the heat seal layer is a pressure-sensitive adhesive layer, the adhesive layer preferably contains a pressure-sensitive adhesive.

The pressure-sensitive adhesive usable in the present disclosure can be appropriately selected from the group consisting of an acrylic pressure-sensitive adhesive, a urethane pressure-sensitive adhesive, a silicone pressure-sensitive adhesive, a rubber pressure-sensitive adhesive, and the like.

When the heat seal layer is a curable adhesive layer, the adhesive layer preferably contains a thermosetting adhesive.

The thermosetting adhesive preferably contains a composition having a property of being crosslinked by a chemical reaction caused by heat, and examples thereof include a two-component curable urethane-based adhesive, a polyester urethane-based adhesive, a polyether urethane-based adhesive, an acrylic-based adhesive, a polyester-based adhesive, a polyamide-based adhesive, a polyvinyl acetate-based adhesive, an epoxy-based adhesive, and a rubber-based adhesive. The urethane-based resin comprising the two-component curable urethane-based adhesive is polyurethane containing a polyol (polyvalent alcohol) as a main agent and an isocyanate as a crosslinking agent (curing agent).

When the heat seal layer is a heat-sensitive adhesive layer, the adhesive layer preferably contains a thermoplastic resin.

Examples of the thermoplastic resin include an acrylic resin, a urethane resin, a vinyl chloride resin, a vinyl acetate resin, a vinyl chloride-vinyl acetate copolymer, a styrene-acrylic copolymer, a polyester resin, an amide resin, a cyanoacrylate resin, and an epoxy resin, and these resins can be used alone or in combination of a plurality thereof. Among them, it is preferable to use an acrylic resin in order to improve the processability during the formation of the member using the transfer sheet and the adhesion between the heat seal layer and the decorative base paper.

The weight-average molecular weight of the thermoplastic resin is preferably 10,000 or more and 200,000 or less, more preferably 50,000 or more and 150,000 or less, and still more preferably 80,000 or more and 120,000 or less. When the weight-average molecular weight of the thermoplastic resin composition is within the above range, the coating aptitude becomes good, and the heat seal layer can be easily formed in a good state. Furthermore, when a decorative plate is produced using a transfer sheet described later, the adhesion between the heat seal layer and the decorative base paper can be easily improved, thereby enhancing the durability of the member.

The thickness of the heat seal layer is preferably 2 $\mu$m or more and 10 $\mu$m or less, more preferably 3 $\mu$m or more and 8 $\mu$m or less, and still more preferably 3 $\mu$m or more and 5 $\mu$m or less. When the thickness of the heat seal layer is within the above range, the adhesion between the heat seal layer and the substrate can be easily improved during the formation of the member.

[Transfer Sheet]

The transfer sheet 2 of the present disclosure is a transfer sheet for the decorative plate and comprises an easy-adhesive layer 13, a surface protective layer 12, and a releasable support 11 in this order, as shown in Fig. 3, in which the surface protective layer 12 is required to contain a first ultraviolet absorbing agent.

The transfer sheet is formed into the decorative plate by successively laminating the decorative base paper and the core paper in this order on the easy-adhesive layer side of the transfer sheet with respect to the surface protective layer and then peeling the releasable support away.

The transfer sheet may further have a heat seal layer on the side of the easy-adhesive layer opposite to the surface protective layer.

<Releasable Support>

As shown in Fig. 3, the releasable support 11 forms the transfer sheet 2 together with the easy-adhesive layer 13 and the surface protective layer 12 and is peeled off from the transfer sheet 2. The releasable support 11 may be only a releasable support or may have a peeling layer (not shown) on at least a part of the surface protective layer 12 side of the releasable support 11. It is preferable that the peeling layer covers the entire surface of the releasable support 11 since the releasable support 11 can be easily peeled off from the surface protective layer 12 together with the peeling layer.

Examples of the releasable support include sheets of various resins, e.g., polyester resins such as polyethylene terephthalate and polybutylene terephthalate; polyolefin resins such as polyethylene and polypropylene; and acrylic resins.

It is preferable to use a resin sheet as the releasable support because the mechanical strength of the transfer sheet is enhanced.

The layer thickness of the releasable support is usually 20 $\mu$m or more and 200 $\mu$m or less and preferably 30 $\mu$m or more and 100 $\mu$m or less in order to obtain excellent mechanical strength.

(Peeling Layer)

The peeling layer preferably contains a peeling agent together with the curable resin. The peeling agent is preferably contained since it facilitates the releasable support to be peeled away from the transfer sheet.

Examples of the peeling agent include a fluorine-based releasing agent and a silicone-based peeling agent, and a silicone-based peeling agent is preferred in order to obtain a higher-quality design property.

The silicone-based releasing agent usable in the present disclosure is the same as the reactive silicone used in the release layer.

The content of the peeling agent is preferably 0.1 parts by mass or more and 5 parts by mass or less, more preferably 0.5 parts by mass or more and 4 parts by mass or less, and still more preferably 1 part by mass or more and 3 parts by mass or less on the basis of 100 parts by mass of the curable resin forming the peeling layer. When the content of the releasing agent is within the above range, the effect of adding the peeling agent can be efficiently attained.

The peeling layer may further contain an inorganic filler, a weather resistance agent such as an ultraviolet absorbing agent and a light stabilizer, and various other additives as desired, alone or a plurality thereof.

The addition of the inorganic filler is preferred since it improves the peeling property with respect to the surface protective layer. The content of the inorganic filler is preferably 10 parts by mass or less on the basis of 100 parts of the curable resin forming a peeling layer, and it is also preferable that the inorganic filler is not contained.

The thickness of the peeling layer is not particularly limited as long as it exhibits the above function, and is usually 0.1 $\mu$m or more and 20 $\mu$m or less, preferably 0.5 $\mu$m or more and 10 $\mu$m or less, and more preferably 1 $\mu$m or more and 5 $\mu$m or less in order to more easily obtain a high-quality design property.

[Method for Producing Decorative Plate]

The method for producing a decorative plate of the present disclosure includes steps (1) to (4) and a step (5) required to be carried out after the steps (1) to (4) below.

(1) As shown in Fig. 4, a step of obtaining a first laminate comprising a decorative base paper 14 and a core paper 15 in this order successively laminated on a transfer sheet comprising a releasable support 11, a surface protective layer 12 comprising a first ultraviolet absorbing agent, and an easy-adhesive layer 13 in this order, on the easy-adhesive layer 13 side with respect to the surface protective layer 12.

(2) A step of impregnating an uncured first curable resin into the decorative base paper.

(3) A step of impregnating an uncured first curable resin into the core layer.

(4) A step of curing the uncured first curable resin by applying heat and pressure to the first laminate.

(5) A step of peeling away the releasable support from the first laminate to obtain a decorative plate comprising the surface protective layer, the easy-adhesive layer, the decorative base paper, and the core paper in this order.

The steps (1) to (4) may be carried out in any order, or a plurality of steps may be performed simultaneously. Examples of preferred production methods include, but are not limited to, production methods (A) to (D).

In the production method (A), the steps (2) and (3) are simultaneously performed after the step (1), then the step (4) is performed, and the step (5) is further performed.

In the production method (A), it is preferable that after the first laminate is obtained in the step (1), the first laminate is immersed in an uncured first curable resin diluted with a solvent, if necessary, to impregnate the uncured first curable resin into the decorative base paper and the core paper.

In the production method (A), since the decorative base paper and the core paper are simultaneously impregnated with the uncured first curable resin, the steps (2) and (3) are simultaneously performed.

After the steps (2) and (3) but before the step (4), the uncured first curable resin impregnated into the decorative base paper and/or the core paper may be semi-cured by heating. Alternatively, after the steps (2) and (3) but before the step (4), the uncured second curable resin contained in the core paper may be semi-cured by heating, if necessary.

The solvent to be used may be the same solvent as described above.

In the step (4), the first laminate impregnated with the uncured first curable resin is heated and pressurized to cure the first curable resin.

During the step (4), the first curable resin may be cured by sandwiching the core paper between two metal plates 16 and 17 shown in Fig. 4 and applying heat and pressure thereto. When the core paper contains an uncured second curable resin, the curing is preferably performed in the step (4). The same applies to the production methods (B) and (C) below.

The metal plate is preferably a mirror plate whose surface is mirror-finished.

The heating temperature is preferably 10°C or more and 300°C or less, more preferably 80°C or more and 200°C or less, and still more preferably 100°C or more and 180°C or less in order to attain excellent mechanical strength.

The applied pressure is preferably 1 MPa or more and 30 MPa or less, more preferably 3 MPa or more and 20 MPa or less, and still more preferably 5 MPa or more and 15 MPa or less.

The heating and pressing time can be appropriately adjusted according to the thickness of the first laminate, and the amount and type of the first curable resin and the second curable resin if contained, and in order to attain excellent mechanical strength, the time is preferably 5 minutes or more and 120 minutes or less, more preferably 10 minutes or more and 60 minutes or less, and still more preferably 20 minutes or more and 50 minutes or less.

The semi-curing is a treatment in which the uncured first curable resin and/or the second curable resin contained if necessary is partially cured rather than completely cured, unlike the step (4). This treatment is preferred because it can prevent the uncured curable resin from leaking out of the decorative base paper and the core paper, adjust the content of the uncured curable resin, and simplify the working steps.

The heating temperature is preferably 10°C or more and 200°C. or less, more preferably 30°C or more and 150°C or less, and still more preferably 50°C or more and 100°C or less.

The heating time can be appropriately adjusted according to the thickness of the decorative base paper and the core layer, and the amount and type of the first curable resin and the second curable resin if contained and is preferably 1 minute or more and 60 minutes or less, more preferably 5 minutes or more and 30 minutes or less, and still more preferably 8 minutes or more and 15 minutes or less.

In the step (1), a transfer sheet 2 further having a heat seal layer 18 shown in Fig. 4 on the side of the easy-adhesive layer 13 opposite to the surface protective layer 12 may be used. The same applies to the production methods (B) and (C) below.

In the step (1), when the decorative base paper includes a pattern layer, it is preferable to laminate the decorative base paper so that the transfer sheet is positioned on the pattern layer side of the decorative base paper since the pattern layer can be visually recognized even if the decorative base paper is opaque.

In the step (5), the releasable support can be peeled away from the first laminate containing a cured product of a first curable resin to obtain a decorative plate having the surface protective layer, the easy-adhesive layer, the decorative base paper, and the core paper in this order.

In the production method (B), the step (2) and the step (1) are performed in this order, and then the step (3) and the step (4) are performed simultaneously.

The production method (B) includes, as the step (2), first impregnating the uncured first curable resin into the decorative base paper. The impregnation can be carried out by the same method as described above. Using the resulting decorative base paper impregnated with the uncured first curable resin, the step (1) is performed to obtain a first laminate.

Preferably, when the first laminate is sandwiched between two metal plates and heated under pressure, the first curable resin impregnated into the decorative base paper is impregnated into the core layer while the first curable resin impregnated into the decorative base paper and the core layer is cured by heating, thereby reducing the number of steps.

Through this heating and pressing, the first curable resin that has been impregnated into the decorative base paper is impregnated into the core paper as the step (3), while the uncured first curable resin is cured as the step (4).

In the step (5), the releasable support can be peeled away from the first laminate containing a cured product of a first curable resin to obtain a decorative plate having the surface protective layer, the easy-adhesive layer, the decorative base paper, and the core paper in this order.

In the production method (C), the step (2), the step (1), the step (3), and the step (4) are performed in this order.

The production method (C) differs from the production method (B) in that the step (3) and the step (4) are performed as separate steps. The production method (C) is the same as the production method (B) until the first laminate is obtained, but differs from the production method (B) in that the first laminate is sandwiched between two metal plates to perform only pressing.

The production method (C) includes, as the step (2), first impregnating the uncured first curable resin into the decorative base paper. The impregnation can be carried out by the same method as described above. Using the resulting decorative base paper impregnated with the uncured first curable resin, the step (1) is performed to obtain a first laminate. The first laminate is sandwiched between two metal plates and pressurized. The pressing can be performed in the same manner as described above. Through this pressing, the first curable resin that has been impregnated into the decorative base paper is impregnated into the core paper as the step (3). This is preferred since the first curable resin can be prevented from being cured in the middle of impregnation into the core paper, and the core paper is uniformly impregnated with the first curable resin.

In the production method (C), the steps of impregnating the uncured first curable resin into the decorative base paper and the core paper are performed separately, instead of simultaneously.

After the step (3), the step (4) is performed.

In the step (5), the releasable support can be peeled away from the first laminate containing a cured product of a first curable resin to obtain a decorative plate having the surface protective layer, the easy-adhesive layer, the decorative base paper, and the core paper in this order.

The production method (D) is to obtain the first laminate by performing the step (1) using "the decorative base paper obtained by the step (2) including the step of semi-curing described above" and "the core paper containing the uncured second curable resin if necessary, with the uncured second curable resin semi-cured". Then, using the obtained first laminate, the processes in (3), (4) and (5) are performed in this order.

The production method (D) includes semi-curing the uncured first curable resin contained in the decorative base paper and performing the step (1) using the semi-cured core paper with the uncured second curable resin contained if necessary. This is preferred since the decrease in adhesion between the layers over time can be suppressed and a decorative plate with excellent weather resistance can be obtained.

In the case where the core paper contains an uncured second curable resin, it is preferable to use the second curable resin in a semi-cured form so that the decorative base paper and the core paper uniformly contain the first curable resin and the second curable resin.

(Use of Decorative Plate)

The decorative plate of the present disclosure is a decorative plate with excellent weather resistance. Therefore, the decorative plate of the present disclosure can be used as it is or subjected to a predetermined molding process or the like for various applications. For example, the decorative plate can be laminated on a substrate such as a plate material including a flat plate or a curved plate or a sheet (or a film) which is made of various materials and used as an interior or exterior building material, e.g., a cabinet for furniture or kitchen products, a top plate used for various counters or desks, or a housing building material such as a door.

Examples of the substrate include wood members used as plate materials or three dimensional articles, such as veneers, plywood, particle boards, and medium-density fiber (MDF) boards which are made of various materials such as Japanese cryptomeria, hinoki cypress, pine, and lauan; metal members used as plate materials or steel plates, three dimensional articles, or sheets which are made iron, aluminum, and the like; ceramic members used as plate materials or three dimensional articles, such as ceramics including glass and potteries, non-cement ceramic materials including gypsum, and non-pottery ceramic materials including autoclaved lightweight concrete (ALC) boards; and resin members used as plate materials, three dimensional articles, or sheets, such as resins including acrylic resins, polyester resins, polystyrene resins, and polypropylene such as polyolefin, acrylonitrile-butadiene-styrene copolymer (ABS) resins, phenol resins, vinyl chloride resins, cellulose resins, and rubber. These members can be used alone or in combination of a plurality thereof.

The present disclosure provides, for example, [1] to [22] below.

[1] A method for producing a decorative plate, comprising steps (1) to (4) and a step (5) carried out after the steps (1) to (4):

(1) a step of obtaining a first laminate comprising a decorative base paper and a core layer in this order successively laminated on a transfer sheet comprising a releasable support, a surface protective layer comprising a first ultraviolet absorbing agent, and an easy-adhesive layer in this order, on the easy-adhesive layer side with respect to the surface protective layer;

(2) a step of impregnating an uncured first curable resin into the decorative base paper;

(3) a step of impregnating an uncured first curable resin into the core layer;

(4) a step of curing the uncured first curable resin by applying heat and pressure to the first laminate; and

(5) a step of peeling away the releasable support from the first laminate to obtain a decorative plate comprising the surface protective layer, the easy-adhesive layer, the decorative base paper, and the core paper in this order.

[2] The method for producing a decorative plate according to [1], wherein the transfer sheet further comprises a heat seal layer on a side of the easy-adhesive layer opposite to the surface protective layer.

[3] The method for producing a decorative plate according to [1] or [2], wherein the easy-adhesive layer comprises a second ultraviolet absorbing agent.

[4] The method for producing a decorative plate according to [3], wherein a content of the first ultraviolet absorbing agent per unit volume of the surface protective layer is less than a content of the second ultraviolet absorbing agent per unit volume of the easy-adhesive layer.

[5] The method for producing a decorative plate according to any one of [1] to [4], wherein the first curable resin is a melamine resin.

[6] The method for producing a decorative plate according to [5], wherein the melamine resin is an aqueous melamine resin.

[7] The method for producing a decorative plate according to any one of [1] to [6], wherein the core paper further comprises an uncured second curable resin before the steps (1) to (4).

[8] The method for producing a decorative plate according to [7], wherein the uncured second curable resin is a phenol resin.

[9] The method for producing a decorative plate according to any one of [1] to [8], wherein the first ultraviolet absorbing agent is a triazine compound.

[10] The method for producing a decorative plate according to any one of [1] to [9], wherein the decorative base paper comprises a pattern layer.

[11] The method for producing a decorative plate according to any one of [1] to [10], wherein the core paper has a basis weight of 100 g/m$^2$ or more and 300 g/m$^2$ or less.

[12] A decorative plate comprising a core paper, a decorative base paper, an easy-adhesive layer, and a surface protective layer in this order, wherein

the core paper and the decorative base paper comprise a cured product of a first curable resin, and
the surface protective layer comprises a first ultraviolet absorbing agent.

[13] The decorative plate according to [12], further comprising a heat seal layer between the easy-adhesive layer and the decorative base paper.

[14] The decorative plate according to [12] or [13], wherein the easy-adhesive layer comprises a second ultraviolet absorbing agent.

[15] The decorative plate according to any one of [12] to [14], wherein the core paper further comprises a cured product of a second curable resin.

[16] The decorative plate according to any one of [12] to [15], wherein the first curable resin is a melamine resin.

[17] The decorative plate according to any one of [12] to [16], wherein the first ultraviolet absorbing agent and a second ultraviolet absorbing agent are triazine compounds.

[18] The decorative plate according to any one of [12] to [17], wherein the decorative base paper comprises a pattern layer.

[19] The decorative plate according to any one of [12] to [18], wherein the surface protective layer comprises a filler.

[20] The decorative plate according to any one of [12] to [19], wherein the surface protective layer has a thickness of 5 μm or more and 100 μm or less.

[21] A transfer sheet for the decorative plate according to any one of [12] to [20], wherein the transfer sheet comprising an easy-adhesive layer, a surface protective layer, and a releasable support in this order, and the surface protective layer comprises a first ultraviolet absorbing agent.

[22] The transfer sheet for a decorative plate according to [21], further comprising a heat seal layer on a side of the easy-adhesive layer opposite to the surface protective layer.

Examples

Hereinafter, the present disclosure is described in detail by referring to Examples, but these Examples are not intended to limit the present disclosure thereto. Each property was measured and evaluated according to the following methods.

1. Measurement and Evaluation Methods

1-1. Evaluation of Weather Resistance (Adhesion)

The decorative plates of Examples and Comparative Examples were subjected to an accelerated weathering test using a metal halide lamp (MWOM) (a test in which a process of 20 hours of UV irradiation under the following irradiation conditions, followed by 4 hours of condensation under the following condensation conditions, is repeated as one cycle) for up to 900 hours.

Every 100 hours, a measurement sample was taken out, and an adhesive tape ("Cellotape (R)", available from NICHIBAN Co., Ltd.) was adhered to an area of 2.5 cm × 2.5 cm so that it protruded about 5 cm from the end of the member. Thereafter, the protruding portion of the adhered adhesive tape was pinched, and the adhesive tape was peeled off in a direction at an angle of 45° with respect to the surface of the member, thereby confirming the adhesion between a hard coat layer and a primer layer.

<Accelerated Weathering Test Conditions>

(Test Apparatus)

Trade name "Daipla Metal Weather" available from Daipla Wintes Co., Ltd.

(Irradiation Condition)

Illumination intensity: 65 mW/cm$^2$
Black panel temperature: 63°C
Humidity in chamber: 50% RH
Time: 20 hours

(Condensation Condition)

Illumination intensity: 0 mW/cm$^2$
Humidity in chamber: 98% RH
Time: 4 hours

<Evaluation Criteria>

A: No peeling occurred between any layers even after the accelerated weathering test was conducted for 900 hours.
B: Peeling occurred between the surface protective layer and the easy-adhesive layer after less than 900 hours of the accelerated weathering test.

1-2. Evaluation of Weather Resistance (Fading)

L*a*b* values of the decorative plates of Examples and Comparative Examples were measured. A spectrophotometer ("CM-3700A" (model number) available from Konica Minolta, Inc.) was used as a measuring device.
Next, the accelerated weathering test was conducted for 1200 hours on the decorative plates of Examples and Comparative Examples. Subsequently, the L*a*b * values after the accelerated weathering test were measured.
The color difference ($\Delta E^*ab$) was then calculated from the values measured before and after the accelerated weathering test.
The color difference ($\Delta E^*ab$) can be calculated by the following formula, where $L^{*1}$, $a^{*1}$, and $b^{*1}$ are the values measured before the accelerated weathering test, and $L^{*2}$, $a^{*2}$, and $b^{*2}$ are the values measured after the accelerated weathering test:

$$\Delta E^*ab = [(L^{*2}-L^{*1})^2+(a^{*2}-a^{*1})^2+(b^{*2}-a^{*2})^2]^{1/2}$$

<Weather Resistance Evaluation Criteria>

AA: ΔE*ab was 2.7 or more.
A: ΔE*ab was 2.5 or more and less than 2.7.
B: ΔE*ab was 2.0 or more and less than 2.5.
C: ΔE*ab was 1.5 or more and less than 2.0.
D: ΔE*ab was less than 1.5.

1-3. Pencil Hardness

A sample of 100 mm long × 100 mm wide was cut out from each of the decorative plates of Examples and Comparative Examples to conduct a pencil hardness test. The pencil hardness test was conducted by a method in accordance with JIS K5600-5-4:1999. Specifically, the load and speed were 100 g and 3 mm/s, respectively. In addition, the requirement for passing the test was that the sample was not scratched three times or more out of five evaluations. For example, when the sample was not scratched 3 times or more out of 5 times at hardness 2B, the sample passed the test at hardness 2B, followed by the test at the next hardness. The acceptable level was that the sample was not scratched 3 times or more out of 5 evaluations at pencil hardness 8H.

1-4. Measurement of Linear Expansion Coefficient

The surface protective layer forming ink and the easy-adhesive layer forming ink used in Examples and Comparative Examples were each applied to the release surface side of a release PET to prepare a monolayer film (thickness: 20 μm) of the surface protective layer and the easy-adhesive layer. Next, the monolayer film was cut out to prepare a sample for linear expansion coefficient measurement having a length of 10 mm, a width of 5 mm, and a thickness of 20 μm.

Each prepared sample for linear expansion coefficient measurement was set in a thermomechanical analyzer (TMA-60, available from Shimadzu Corporation) to measure the linear expansion coefficient under the following conditions. The measurement results are summarized in Table 1.

<Measurement Conditions>

Atmospheric gas: nitrogen
Load: 2 g/5 mm
Measurement mode: tensile
Temperature program

Step 1: Raised temperature to 30°C at 10°C/min, then held at 30°C for 10 minutes.
Step 2: Raised temperature to 100°C at 5°C/min, then held at 100°C for 1 minute.
Step 3: Cooled to 0°C at -30°C/min.

In addition, the following values and $B_{HC-Pr}-A_{HC-Pr}$ were obtained from the measurement results of the linear expansion coefficient.

$A_{HC-Pr}$: Absolute value of the difference in the linear expansion coefficient between the surface protective layer and the easy-adhesive layer in a temperature range of 40°C to 50°C
$B_{HC-Pr}$ Absolute value of the difference in the linear expansion coefficient between the surface protective layer and the easy-adhesive layer in a temperature range of 70°C to 80°C
$B_{HC-Pr}-A_{HC-Pr}$ of $5.00 \times 10^{-4}$/°C or less was determined to be at the acceptable level.

[Example 1]

2-1. Production of Transfer Sheet

A release PET film ("E5001" available from Toyobo Co., Ltd.) having a thickness of 25 μm was prepared as a releasable support. A surface protective layer forming ink 1 described below was applied onto the release-treated surface of the release film such that the coating amount after drying was 5 g/m², dried at 70°C for 1 minutes, and then irradiated with an electron beam (accelerating voltage: 175 keV, 5 Mrad (50 kGy)) to form a surface protective layer having a thickness of 5 μm. Furthermore, corona treatment was carried out at 90 kW on the surface side of the formed surface protective layer.

<Surface Protective Layer Forming Ink 1>

Urethane acrylate: 100 parts by mass
(bifunctional caprolactone-modified urethane acrylate/polyfunctional urethane acrylate = 50/50 (mass ratio))
Ultraviolet absorbing agent: 1.5 parts by mass
(product name: "Tinuvin 479" available from BASF)
Light stabilizer: 3 parts by mass
(product name "LS-3410" available from Nippon Nyukazai Co., Ltd.)
Nanosilica (average particle size: less than 1 $\mu$m): 2 parts by mass
Non-reactive silicone: 0.2 parts by mass
Solvent: q.s.
(methyl ethyl ketone)

Subsequently, an easy-adhesive layer forming ink 1 was applied onto the formed surface protective layer so that the coating amount after drying was 3 g/m$^2$, and dried at 70°C for 1 minute to form an easy-adhesive layer having a thickness of 3 $\mu$m, thereby obtaining a transfer sheet.

<Easy-adhesive layer Forming Ink 1>

Polycarbonate urethane acrylic copolymer: 100 parts by mass
(urethane component/acrylic component = 90/10 (mass ratio))
Ultraviolet absorbing agent: 30 parts by mass
("Tinuvin 479" (available from BASF) 16 parts by mass and "Tinuvin 400" (available from BASF) 14 parts by mass)
Light stabilizer: 3 parts by mass
("Tinuvin 123" (available from BASF))
Silica (average particle size: 3 to 5 $\mu$m): 3 parts by mass
Hexamethylene diisocyanate-based curing agent: 10 parts by mass
Solvent: q.s.
(methyl ethyl ketone)

2-2. Preparation of Decorative Base Paper

A liquid uncured composition of a first curable resin containing 60 parts by mass of melamine formaldehyde resin as the first curable resin, 35 parts by mass of water, and 5 parts by mass of isopropyl alcohol was impregnated into a titanium paper base paper for building materials (product name "PM-67P" available from KJ SPECIALTY PAPER Co., Ltd., basis weight: 80 g/m$^2$, thickness: 100 $\mu$m) using an impregnating apparatus for impregnation so that the ratio of the uncured composition was 80 g/m$^2$ (when dried), and then dried to obtain a decorative base paper impregnated with the uncured first curable resin.
The resulting decorative base paper was heated at 80°C for 10 minutes to semi-cure the melamine formaldehyde resin.
Using a pattern printing ink (Ode SPTI, available from DIC Graphics Corporation), a woodgrain pattern layer having a thickness of 3 $\mu$m was formed on one surface of the resulting decorative base paper to obtain a decorative base paper.

2-3. Method for Producing Decorative Plate

The decorative base paper prepared in the section of 2-2 was laminated on the easy-adhesive layer side with respect to the surface protective layer of the transfer sheet produced in the section of 2-1, so that the pattern layer was on the transfer sheet side. Furthermore, a core paper (Ohta Core, available from Ohta Sangyo K. K.) was laminated to be in contact with the decorative base paper, thereby obtaining a first laminate. The core paper was a phenol resin-impregnated core paper obtained by impregnating a resin liquid made of phenol resin as a second curable resin to have a basis weight of 245 g/m$^2$ into a kraft paper, and was heated at 80°C for 10 minutes to semi-cure the phenol resin.
The obtained first laminate was sandwiched between two mirror-finished metal plates (mirror-finished plates) and heated and pressurized under conditions of a pressure of 8 MPa and a molding temperature of 140°C for 30 minutes using a hot press machine to cure the uncured first curable resin, the uncured second curable resin, and the uncured easy-adhesive layer while impregnating the core layer with the first curable resin that had been impregnated into the decorative base paper.

A peelable support was peeled away from the resulting cured first laminate to produce a decorative plate.

[Example 2]

In the section of 2-1. Production of Transfer Sheet in Example 1, the easy-adhesive layer forming ink 1 was applied onto the surface protective layer so that the coating amount after drying was 3 g/m$^2$ and dried at 70°C for 1 minute to form an easy-adhesive layer having a thickness of 3 $\mu$m. Then, an acrylic resin (PMMA, weight-average molecular weight: 96,000) was further applied onto the easy-adhesive layer and dried to form a heat seal layer having a thickness of 4 $\mu$m, thereby obtaining a transfer sheet.

The same procedure as in Example 1 was repeated except for using the obtained transfer sheet, thereby producing a decorative plate.

[Comparative Example 1]

The same procedure as in Example 1 was repeated except that the surface protective layer forming ink 1 did not contain an ultraviolet absorbing agent and a light stabilizer, and the easy-adhesive layer forming ink 1 did not contain an ultraviolet absorbing agent and a light stabilizer, thereby obtaining a transfer sheet and a decorative plate of Comparative Example 1.

Table 1 summarizes the evaluation results of weather resistance (adhesion), weather resistance (fading), and pencil hardness of the decorative plates obtained in Example 1 and Comparative Example 1.

Table 1

| | Example | | Comparative Example |
|---|---|---|---|
| | 1 | 2 | 1 |
| Adhesion | A | A | A |
| Fading | A | A | C |
| Pencil hardness | Pass | Pass | Pass |
| $B_{HC\text{-}Pr}$-$A_{HC\text{-}Pr}$(/°C) | $2.85\times10^{-4}$ | $2.85\times10^{-4}$ | $2.85\times10^{-4}$ |

Since Examples 1 and 2 were excellent in weather resistance (adhesion), weather resistance (fading), and pencil hardness, it was confirmed that a decrease in adhesion between the layers and fading over time were suppressed even when the decorative plate and the transfer sheet of the present disclosure were used, especially in exterior members, etc.

In contrast, in Comparative Example 1, although the adhesion and pencil hardness were substantially the same as those in Examples 1 and 2, $\Delta E^*ab$ changed significantly, resulting in fading and poor weather resistance.

Industrial Applicability

The decorative sheet and transfer sheet of the present disclosure have excellent weather-resistant adhesion, and therefore are suitably used as interior members for buildings such as walls, ceilings, and flooring materials, or exterior members such as outer walls, roofs, soffits, fences, and gate doors; window frames; various doors such as entrance doors; fittings or fixtures such as balustrades, baseboards, verandahs, window frames, door frames, and malls, as well as general furniture such as chests of drawers, shelves, and desks, kitchen furniture such as dining tables and sinks, surface decorative plates for cabinets of kitchen wares such as light-electrical appliances or OA devices, and interior and exterior members for vehicles. In addition, members using the decorative sheet and the transfer sheet of the present disclosure are suitably used as various members described above, especially as the members used in an environment exposed to direct sunlight.

Reference Signs List

1  Decorative plate

2     Transfer sheet
3     First laminate
11    Releasable support
12    Surface protective layer
13    Easy-adhesive layer
14    Decorative base paper
15    Core layer
16    Metal plate
17    Metal plate
18    Heat seal layer

**Claims**

1. A method for producing a decorative plate, comprising steps (1) to (4) and a step (5) carried out after the steps (1) to (4):

   (1) a step of obtaining a first laminate comprising a decorative base paper and a core layer in this order successively laminated on a transfer sheet comprising a releasable support, a surface protective layer comprising a first ultraviolet absorbing agent, and an easy-adhesive layer in this order, on the easy-adhesive layer side with respect to the surface protective layer;
   (2) a step of impregnating an uncured first curable resin into the decorative base paper;
   (3) a step of impregnating an uncured first curable resin into the core layer;
   (4) a step of curing the uncured first curable resin by applying heat and pressure to the first laminate; and
   (5) a step of peeling away the releasable support from the first laminate to obtain a decorative plate comprising the surface protective layer, the easy-adhesive layer, the decorative base paper, and the core paper in this order.

2. The method for producing a decorative plate according to claim 1, wherein the transfer sheet further comprises a heat seal layer on a side of the easy-adhesive layer opposite to the surface protective layer.

3. The method for producing a decorative plate according to claim 1, wherein the easy-adhesive layer comprises a second ultraviolet absorbing agent.

4. The method for producing a decorative plate according to claim 3, wherein a content of the first ultraviolet absorbing agent per unit volume of the surface protective layer is less than a content of the second ultraviolet absorbing agent per unit volume of the easy-adhesive layer.

5. The method for producing a decorative plate according to claim 1, wherein the first curable resin is a melamine resin.

6. The method for producing a decorative plate according to claim 5, wherein the melamine resin is an aqueous melamine resin.

7. The method for producing a decorative plate according to claim 1, wherein the core paper further comprises an uncured second curable resin before the steps (1) to (4).

8. The method for producing a decorative plate according to claim 7, wherein the uncured second curable resin is a phenol resin.

9. The method for producing a decorative plate according to claim 1, wherein the first ultraviolet absorbing agent is a triazine compound.

10. The method for producing a decorative plate according to claim 1, wherein the decorative base paper comprises a pattern layer.

11. The method for producing a decorative plate according to claim 1, wherein the core paper has a basis weight of 100 g/m$^2$ or more and 300 g/m$^2$ or less.

12. A decorative plate comprising a core paper, a decorative base paper, an easy-adhesive layer, and a surface protective layer in this order, wherein

the core paper and the decorative base paper comprise a cured product of a first curable resin, and
the surface protective layer comprises a first ultraviolet absorbing agent.

13. The decorative plate according to claim 12, further comprising a heat seal layer between the easy-adhesive layer and the decorative base paper.

14. The decorative plate according to claim 12, wherein the easy-adhesive layer comprises a second ultraviolet absorbing agent.

15. The decorative plate according to claim 12, wherein the core paper further comprises a cured product of a second curable resin.

16. The decorative plate according to claim 12, wherein the first curable resin is a melamine resin.

17. The decorative plate according to claim 12, wherein the first ultraviolet absorbing agent and a second ultraviolet absorbing agent are triazine compounds.

18. The decorative plate according to claim 12, wherein the decorative base paper comprises a pattern layer.

19. The decorative plate according to claim 12, wherein the surface protective layer comprises a filler.

20. The decorative plate according to claim 12, wherein the surface protective layer has a thickness of 5 $\mu$m or more and 100 $\mu$m or less.

21. A transfer sheet for the decorative plate according to claim 12, wherein the transfer sheet comprising an easy-adhesive layer, a surface protective layer, and a releasable support in this order, and the surface protective layer comprises a first ultraviolet absorbing agent.

22. The transfer sheet for a decorative plate according to claim 21, further comprising a heat seal layer on a side of the easy-adhesive layer opposite to the surface protective layer.

[Fig. 1]

[Fig. 2]

[Fig. 3]

[Fig. 4]

## INTERNATIONAL SEARCH REPORT

International application No.

**PCT/JP2023/002170**

### A. CLASSIFICATION OF SUBJECT MATTER

***B32B 27/00***(2006.01)i; ***B32B 27/04***(2006.01)i; ***B32B 27/10***(2006.01)i
FI:  B32B27/00 E; B32B27/04 A; B32B27/10

According to International Patent Classification (IPC) or to both national classification and IPC

### B. FIELDS SEARCHED

Minimum documentation searched (classification system followed by classification symbols)

B32B27/00; B32B27/04; B32B27/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-64132 A (DAINIPPON PRINTING CO LTD) 25 April 2019 (2019-04-25) claims, paragraphs [0050]-[0055], [0092]-[0103], examples, fig. 2 | 1-22 |
| Y | JP 2000-296584 A (DAINIPPON PRINTING CO LTD) 24 October 2000 (2000-10-24) claims, paragraphs [0001], [0014]-[0019], examples, fig. 1-2 | 1-22 |
| Y | JP 2017-209898 A (IBIDEN CO LTD) 30 November 2017 (2017-11-30) paragraphs [0024]-[0033], examples | 1-22 |
| Y | JP 2020-90067 A (TOPPAN PRINTING CO LTD) 11 June 2020 (2020-06-11) paragraph [0015] | 2, 13, 22 |
| Y | JP 2017-177375 A (TOPPAN PRINTING CO LTD) 05 October 2017 (2017-10-05) paragraphs [0013], [0014], [0036] | 2, 13, 22 |
| Y | JP 2020-111063 A (DAINIPPON PRINTING CO LTD) 27 July 2020 (2020-07-27) claims, paragraphs [0031]-[0032] | 9, 17 |
| Y | JP 2020-111062 A (DAINIPPON PRINTING CO LTD) 27 July 2020 (2020-07-27) claims, paragraphs [0025]-[0027] | 9, 17 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 April 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/002170** |

| C. | DOCUMENTS CONSIDERED TO BE RELEVANT | |
|---|---|---|
| Category* | Citation of document, with indication, where appropriate, of the relevant passages | Relevant to claim No. |
| Y | JP 2014-208493 A (DAINIPPON PRINTING CO LTD) 06 November 2014 (2014-11-06) claims, paragraphs [0038]-[0039], [0061], [0068], [0070] | 9, 17 |

Form PCT/ISA/210 (second sheet) (January 2015)

INTERNATIONAL SEARCH REPORT
Information on patent family members

International application No.

**PCT/JP2023/002170**

| Patent document cited in search report | | | Publication date (day/month/year) | Patent family member(s) | Publication date (day/month/year) |
|---|---|---|---|---|---|
| JP | 2019-64132 | A | 25 April 2019 | (Family: none) | |
| JP | 2000-296584 | A | 24 October 2000 | (Family: none) | |
| JP | 2017-209898 | A | 30 November 2017 | (Family: none) | |
| JP | 2020-90067 | A | 11 June 2020 | (Family: none) | |
| JP | 2017-177375 | A | 05 October 2017 | (Family: none) | |
| JP | 2020-111063 | A | 27 July 2020 | US 2021/0381248 A1<br>claims, paragraphs [0075]-[0079]<br>WO 2020/075563 A1<br>EP 3865300 A1<br>KR 10-2021-0069696 A<br>CN 112888564 A | |
| JP | 2020-111062 | A | 27 July 2020 | US 2022/0009207 A1<br>claims, paragraphs [0076]-[0080]<br>WO 2020/075561 A1<br>EP 3865299 A1<br>CN 112839808 A<br>KR 10-2021-0076023 A | |
| JP | 2014-208493 | A | 06 November 2014 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021062580 A